# EUROPÄISCHE PATENTSCHRIFT

(11) **EP 2 271 477 B1**
(45) Veröffentlichungstag und Bekanntmachung des Hinweises auf die Patenterteilung: **19.09.2012**
(21) Anmeldenummer: 09735682.8
(22) Anmeldetag: 02.04.2009
(51) Int. Cl.: B29C 70/34, B29C 70/54, B29C 53/04, B64C 1/06

(54) **VORRICHTUNG ZUR HERSTELLUNG EINES BAUTEILS SOWIE VERFAHREN**
DEVICE FOR PRODUCING A COMPONENT AND METHOD
DISPOSITIF ET PROCÉDÉ DE PRODUCTION D'UN COMPOSANT

(30) Priorität: 23.04.2008 DE 102008020347; 23.04.2008 US 125159
(43) Veröffentlichungstag der Anmeldung: 12.01.2011
(73) Patentinhaber: Airbus Operations GmbH, 21129 Hamburg (DE)
(72) Erfinder: BOCHINGER, Marc, 25336 Elmshorn (DE); EDELMANN, Klaus, 28199 Bremen (DE); LANGE, Thomas, 27753 Delmenhorst (DE); FRESE, Tanja, 27367 Horstedt (DE); SPERLING, Sven, 28790 Schwanewede (DE); TSCHAKROW, Eugen, 34516 Vöhl (DE); WIRTZ, Tobias, 81245 München (DE)
(74) Vertreter: Isarpatent
(86) Internationale Anmeldenummer: PCT/EP2009/053945
(87) Internationale Veröffentlichungsnummer: WO 2009/130120

(56) Entgegenhaltungen:
- WO-A1-99/38683
- WO-A1-2009/019083
- FR-A1- 2 374 158
- US-A- 4 744 848
- US-A1- 2002 056 943

## Beschreibung

Die Erfindung betrifft eine Vorrichtung zur Herstellung eines Bauteils, insbesondere eines Winkels zur Anbindung einer Rumpfzellenhaut an einen Ringspant eines Flugzeugs, wobei das Bauteil durch einzugiges Umformen eines ebenen Zuschnittes entlang von mindestens drei Faltlinien in einer Pressvorrichtung umgeformt wird, und der Zuschnitt mit einem faserverstärkten thermoplastischen Kunststoff gebildet ist.

Darüber hinaus hat die Erfindung ein Verfahren zur Herstellung eines derartigen Bauteils mittels der Vorrichtung zum Gegenstand.

Die Rumpfzellen von Flugzeugen werden im Fall der klassischen Aluminiumsektionsbauweise im Allgemeinen aus einer Vielzahl von hintereinander angeordneten und durch umlaufende Quernähte verbundenen Rumpfsektionen hergestellt, wobei die mindestens zwei Schalensegmente jeweils mit Längsnähten verbunden werden. Zur Gewichtseinsparung werden die Rumpfsektionen bzw. die Schalensegmente zunehmend mit Verbundwerkstoffen, insbesondere mit kohlenstofffaserverstärkten Kunststoffen (CFK), gefertigt. Bei dieser Bauweise wird eine CFK-Rumpfzellenhaut mit Ringspanten, die gleichfalls mit CFK-Profilen gebildet sind, innenseitig ausgesteift. Parallel zur Längserstreckung der Rumpfsektion sind auf einer Innenfläche der Rumpfzellenhaut über deren Umfang hinweg gleichmäßig verteilt CFK-Längsversteifungsprofile ("Stringerprofile") angeordnet. Die Stringerprofile können bei der Herstellung der CFK-Rumpfzellenhaut integral mit ausgebildet werden. Die Anbindung zwischen den Ringspanten und der Rumpfzellenhaut erfolgt mit Winkeln (so genannte "Clips"). Diese Winkel weisen im Wesentlichen einen Schenkel zur Anlage am Ringspant, einen Schenkel zur Anlage an der Rumpfzellenhaut sowie einen Winkel zur Stringeranbindung auf. Die Anbindung der Winkel an die Ringspante und die Rumpfzellenhaut kann wahlweise durch Kleben, Nieten, Schrauben, Schweißen oder eine Kombination hiervon erfolgen.

Um Korrosionsprobleme im Kontaktbereich zwischen den Aluminiumwinkeln, den CFK-Ringspanten und der CFK-Rumpfzellenhaut zu vermeiden und darüber hinaus das Gewicht weiter zu verringern, werden die Winkel anstatt aus gekanteten Aluminiumblechplatinen ebenfalls mit einem faserverstärkten Kunststoffmaterial hergestellt. Da die Fertigung der in sehr großer Stückzahl benötigten Winkel (bis zu 10.000 Stück pro Flugzeug, in Abhängigkeit vom Typ) mit kohlefaserverstärkten duroplastischen Kunststoffen wegen der erforderlichen Aushärtungsprozeduren zu zeitaufwändig ist, werden plattenförmige Halbzeuge, die mit kohlenstofffaserverstärkten thermoplastischen Kunststoffen gebildet sind, verwendet.

Dokument US 4, 744, 848 beschribt die Herstellung eines Bauteils durch Umformung einen Zuschnittes.

Bei der Umformung derartiger plattenförmiger Halbzeuge aus gewebeverstärkten thermoplastischen Kunststoffen ist anders als bei der herkömmlichen metallischen Blechumformung die Herstellung (Formgebung und Konsolidierung) des Bauteils in einem einzigen Umformschritt erstrebenswert, um das wiederholte Erwärmen zu vermeiden. Zunächst wird der gesamte Zuschnitt erhitzt und nach dem Überschreiten der Schmelztemperatur mittels eines in einer Presse befindlichen Unter- und Oberwerkzeugs zum fertigen Bauteil umgeformt und konsolidiert. Dabei können mit einer einachsigen Presse lediglich Umformungen realisiert werden, bei denen die lineare Schließbewegung des Oberwerkzeugs auf das Unterwerkzeug dafür sorgt, dass das plastifizierte kohlefaserverstärkte thermoplastische Material in die gewünschte Position gebracht wird. Durch dieses Erfordernis wird das Bauteildesign stark eingeschränkt. Erfordert eine konstruktive Vorgabe hinsichtlich des Bauteils zum Beispiel mehrere aufeinander folgende Umformschritte - die im Fall der Aluminiumblechumformung problemlos realisierbar sind -, so ist dies bei den faserverstärkten thermoplastischen Platten bislang nicht umsetzbar, da stets das gesamte Bauteil vollständig aufgeschmolzen, das heißt plastifiziert werden muss und beim anschließenden Formgebungsprozess (Pressen) wieder komplett konsolidiert wird, also sämtliche Werkstückflächen mit einem hinreichend hohen Druck beaufschlagt werden müssen.

Ferner ist zu berücksichtigen, dass beim Umformen von thermoplastischen Halbzeugen zwingend das so genannte "interlaminare Gleiten" auftritt, das heißt die übereinandergeschichteten Faserlagen in der kohlefaserverstärkten thermoplastischen Platte verschieben sich bedingt durch die innen- und außenseitig jeweils unterschiedlichen Umformradien in Relation zu einander. Hierdurch kann es beim Umformen zu einer Beeinträchtigung des Verlaufs und der Integrität der Faserarmierung kommen.

Darüber hinaus soll der Zuschnitt in einen so genannten "autostabilisierten" Winkel umgeformt werden, der in der Lage ist, auch in der Längsrichtung des Flugzeugs auftretende Kräfte aufzunehmen. Hierdurch wird die Notwendigkeit eines zusätzlichen Stabilisierungselements (so genannter "Stabilo") für jeden einzelnen Winkel vermieden, der das Gewicht und den Montageaufwand erhöht.

Aufgabe der Erfindung ist es daher, aus ebenen, plattenförmigen Zuschnitten eines faserverstärkten thermoplastischen Kunststoffes komplexe dreidimensionale Bauteile, insbesondere autostablisierte, einstückige sowie korrosionsresistente Winkel (so genannte "Clips"), in einem einzugigen Umformprozess mit einer insbesondere einachsigen Presse mit einem Unter- und einem Oberwerkzeug herzustellen.

Diese Aufgabe wird zunächst durch eine Vorrichtung mit den Merkmalen des Patentanspruchs 1 gelöst.

Dadurch, dass zwischen einem Unterwerkzeug und einem Oberwerkzeug ein Spannrahmen mit mindestens einem Scharnier angeordnet ist und der Zuschnitt im Spannrahmen befestigt, insbesondere eingehängt ist,
kann der anfänglich ebene Zuschnitt in einem Zug bzw. in einem Umformschritt in einer einfachen, einachsigen Pressvorrichtung in einen autostabilisierten Winkel umgeformt werden, wobei die drei resultierenden Faltlinien sich unter einem Winkel von etwa 90° schneiden. Hierbei tritt keinerlei Faltenbildung auf und der Verlauf bzw. die Integrität der Verstärkungsfaseranordnung im thermoplastischen Zuschnitt wird in keinster Weise beeinträchtigt, so dass der spätere Winkel über ideale statische Eigenschaften verfügt.
Der Zuschnitt wird zum Beispiel aus einer bevorzugt kohlefaserverstärkten Thermoplastplatte herausgetrennt (so genanntes "Organo-Blech"). Zur Bildung der die Faserarmierung einschließenden thermoplastischen Matrix sind insbesondere Hochleistungsthermoplaste wie zum Beispiel Polyetherelherketon (PEEK), Polyetherimid (PEI), Polyetherketonketon (PEKK), Polyphenylensulfid (PPS) oder beliebige Kombinationen hiervon geeignet.

Nach einer vorteilhaften Ausgestaltung ist der Zuschnitt in dem Spannrahmen mittels einer Vielzahl von elastischen Elementen, insbesondere (Zug-)Federn, eingehängt.
Infolge der umfangsseitig elastischen Aufhängung des Zuschnittes kann dieser im plastifizierten Zustand ohne die Gefahr einer Faltenbildung entlang von drei, ungefähr senkrecht aufeinander stehenden Faltlinien gleichzeitig umgeformt werden, wobei das interlaminare Gleiten nicht behindert wird und sich eine optimale mechanische Festigkeit und Bauteiltoleranz ergibt.

Nach Maßgabe einer erfindungsgemäßen Fortbildung der Vorrichtung ist vorgesehen, dass der Spannrahmen mit mindestens zwei Segmenten gebildet ist, wobei die Segmente durch mindestens ein Scharnier gelenkig miteinander verbunden sind.

Infolge der segmentiert-gelenkigen Ausbildung des Spannrahmens kann dieser durch das Verschwenken der einzelnen Segmente passgenau an das Unterwerkzeug angelegt werden. In einem so genannten "Grundzustand" des Spannrahmens liegen alle Segmente in einer Ebene, während im so genannten "Formzustand" die Segmente mittels der Scharniere derart gegeneinander verkippt bzw. verschwenkt sind, dass diese im Wesentlichen einer Umfangskontur eines Unterwerkzeugs zu folgen vermögen.

Nach Maßgabe einer weiteren Ausgestaltung sind die Segmente jeweils ungefähr L-förmig ausgestaltet.
Hierdurch können die Segmente - eine entsprechende Verschwenkung in Relation zueinander vorausgesetzt - allseitig an das Unterwerkzeug, dessen Form beispielsweise im Wesentlichen einer dreiseitigen Pyramide entspricht, angelegt werden.

Weitere vorteilhafte Ausgestaltungen der Vorrichtung sind in den weiteren Patentansprüchen dargelegt.

Darüber hinaus wird die erfindungsgemäße Aufgabe durch ein Verfahren nach Maßgabe des Patentanspruchs 11 mit den folgenden Schritten gelöst:
a) Einbringen eines mit einem faserverstärkten thermoplastischen Kunststoff gebildeten ebenen Zuschnittes in einen Spannrahmen,
b) Erhitzen des Zuschnittes,
c) Positionieren des Spannrahmens auf einem Unterwerkzeug, und
d) Zusammenpressen des Unterwerkzeugs und eines Oberwerkzeugs in einer Pressvorrichtung.

Infolge der vorstehend geschilderten Vorgehensweise wird die Fertigung eines autostabilisierten Winkels aus einem ebenen Zuschnitt in einem einzugigen Umformprozess mittels einer einfachen, insbesondere einachsigen Pressvorrichtung, ermöglicht.
Nach dem Abschluss des Umformvorgangs wird der Winkel noch durch Beschneiden bzw. Besäumen auf eine vorgegebene Sollkontur gebracht. Hierbei werden zugleich die infolge des interlaminaren Gleitens entstehenden schrägen Kanten winklig geschnitten und der Randbereich mit den zur Einhängung der (Zug-)Federn erforderlichen (Halte-)Bohrungen abgetrennt. Abschließend können die Befestigungsbohrungen in den Winkel, zum Beispiel mittels spanender Fertigungsverfahren, eingebracht werden. Dies kann alternativ auch vor dem Umformgang erfolgen.

Sowohl das Besäumen des fertig umgeformten Winkels als auch das Einbringen der Befestigungsbohrungen kann auch mit nicht spanenden Verfahren, wie zum Beispiel mit dem Laserstrahl- oder Wasserstrahlschneiden, erfolgen.

Dadurch, dass der autostabilisierte Winkel mit einem faserverstärkten thermoplastischen Kunststoffmaterial gebildet ist,
sind zunächst Korrosionsprobleme im Zusammenhang mit CFK-Bauteilen ausgeschlossen. Darüber hinaus ergibt sich durch den Einsatz des autostabilisierten Winkels ein erhebliches Gewichtseinsparungspotential bei einer zugleich vereinfachten Montage, da zusätzliche Elemente zur Abstützung der Ringspanten innerhalb der Rumpfzellenstruktur eines Flugzeug aufgrund der autostabilisierenden Eigenschaften entfallen können.

Weitere vorteilhafte Ausgestaltungen der Vorrichtung sowie des Verfahrens sind in weiteren Patentansprüchen dargelegt.

In der Zeichnung zeigt:
- **Fig. 1**: Einen aus dem Stand der Technik bekannten herkömmlichen Aluminium- Anbindungswinkel (so genannter "Clip"),
- **Fig. 2**: einen mit einem faserverstärkten thermoplastischen Material gebildeten Zuschnitt zur anschließenden Umformung,
- **Fig. 3**: eine Draufsicht auf einen Spannrahmen mit eingehängtem Zuschnitt,
- **Fig. 4**: eine perspektivische Ansicht eines Unterwerkzeugs,
- **Fig. 5**: das Unterwerkzeug mit positioniertem Spannrahmen und Zuschnitt,
- **Fig. 6**: eine perspektivische Ansicht eines Oberwerkzeugs, und
- **Fig. 7**: eine perspektivische Ansicht des umgeformten autostabilisierten Winkels.

In der Zeichnung weisen dieselben konstruktiven Elemente jeweils die gleichen Bezugsziffern auf.

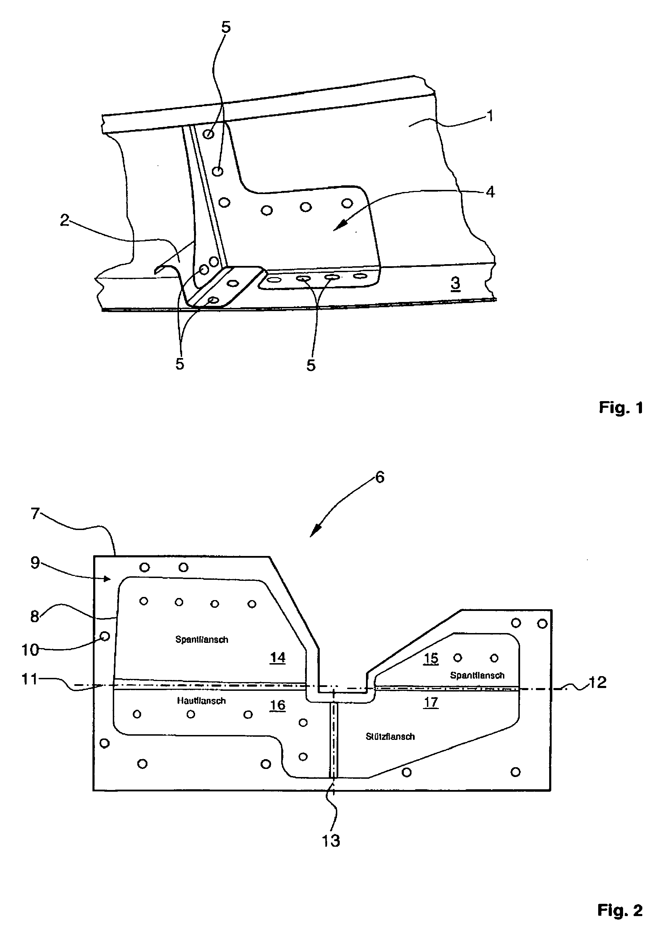

Die Fig. 1 zeigt einen aus dem Stand der Technik bekannten (Aluminium)-Winkel (so genannter "Clip"), der durch mindestens einen Umformschritt in einer Pressvorrichtung oder Kantvorrichtung aus einem geeigneten, hochfesten Aluminiumlegierungsmaterial hergestellt wird.
Ein Ringspant 1, ein Längsversteifungselement, insbesondere ein Stringer 2, sowie eine Rumpfzellenhaut 3 innerhalb einer Rumpfzellenstruktur eines Flugzeugs sind durch einen Aluminiumwinkel 4 in einem Kreuzungsbereich jeweils miteinander verbunden. Die mechanische Verbindung der vorstehend erwähnten Komponenten unter Schaffung eines Kreuzungspunktes erfolgt im gezeigten Ausführungsbeispiel durch eine Vielzahl von Nieten 5.

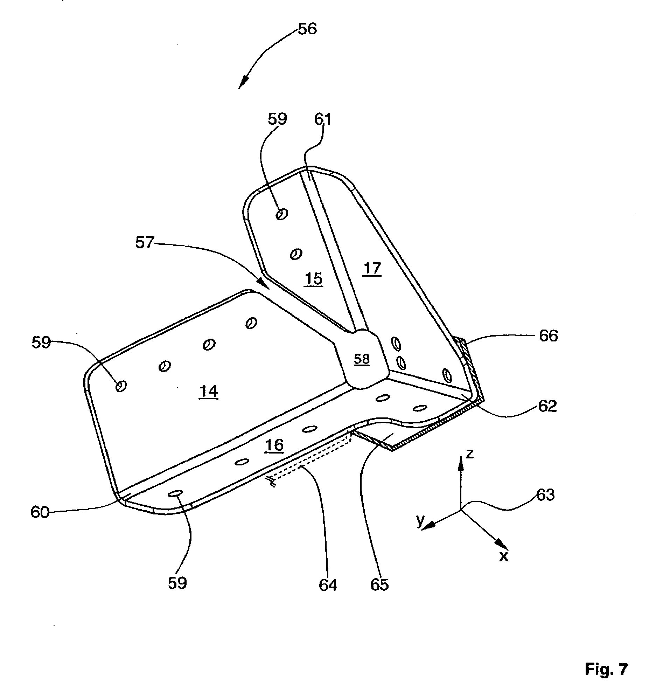

Die Fig. 2 zeigt einen anfänglich ebenen, mit einem geeigneten faserverstärkten thermoplastischen Material gebildeten Zuschnitt zur anschließenden Umformung mittels der erfindungsgemäßen Vorrichtung.
Ein Zuschnitt 6 aus einer faserverstärkten Platte aus einem zunächst ebenen, bevorzugt mit Kohlenstofffasern armierten thermoplastischen Kunststoffmaterial verfügt über eine Außenkontur 7, die eine Innenkontur 8 unter Bildung eines umlaufenden Randbereichs 9 umschließt. In dem sich zwischen der Innenkontur 8 und der Außenkontur 7 ergebenden Randbereich 9 ist eine Vielzahl von (Halte-)Bohrungen eingebracht, von denen eine (Halte-)Bohrung 10 repräsentativ für alle weiteren im Randbereich 9 befindlichen Löcher mit einer Bezugsziffer versehen ist. Die Bohrungen 10 im Randbereich 9 dienen lediglich zum elastischen Einhängen des Zuschnittes 6 in einen Spannrahmen mittels (Zug-)Feder. Die innerhalb der Innenkontur 8 liegenden Löcher werden erst später, nach dem Abschluss des Umformvorgangs in den Zuschnitt 6 bzw. den Winkel eingebracht und dienen zur Verbindung mit den Strukturelementen der Rumpfzelle des Flugzeugs (Spante, Stringer, Rumpfzellenhaut).
Die Umformung des Zuschnittes 6 erfolgt entlang von drei strichpunktiert dargestellten Faltachsen bzw. Faltlinien 11 bis 13. Durch die Unterteilung der Faltlinien 11 bis 13 ergeben sich zwei (spätere) Spantflansche 14,15, ein (späterer) Hautflansch 16 sowie ein (späterer) Stützflansch 17 bzw. Stringerflansch. Die beiden Spantflansche 14,15 dienen zur Anbindung eines Spantes an den durch Umformen des Zuschnittes 6 erzeugten Winkel, während über den Hautflansch 16 die Verbindung mit der Rumpfzellenhaut sichergestellt wird. Der Stützflansch 17 dient zur Aufnahme von Kräften, die in Längsrichtung des Flugzeugs, das heißt parallel zu den Stringern angreifen und übernimmt damit die Aufgabe des so genannten "Stabilos". Darüber hinaus ist eine Verbindung zwischen dem Stützflansch 17 und den Stringern, zum Beispiel durch Nieten, denkbar.
Zu beachten sind ferner die jeweils beidseitig der Faltlinien 11 bis 13 verlaufenden, nicht mit einer Bezugsziffer versehenen Linien, die die späteren Umformbereiche (vgl. Fig. 7) andeuten, wobei die beidseitig der Faltlinie 11 verlaufenden Linien eine derartige Krümmung aufweisen, dass der somit gleichfalls leicht gebogene Hautflansch 16 im Idealfall vollflächig am jeweiligen Einbauort an der gekrümmten Rumpfzellenhaut anliegt.
Die Faltlinien 11,12 verlaufen in einer Linie oder leicht parallel zueinander versetzt, während die Faltlinie 13 zu den beiden Faltlinien 11,12 unter einem Winkel von etwa 90° verläuft.

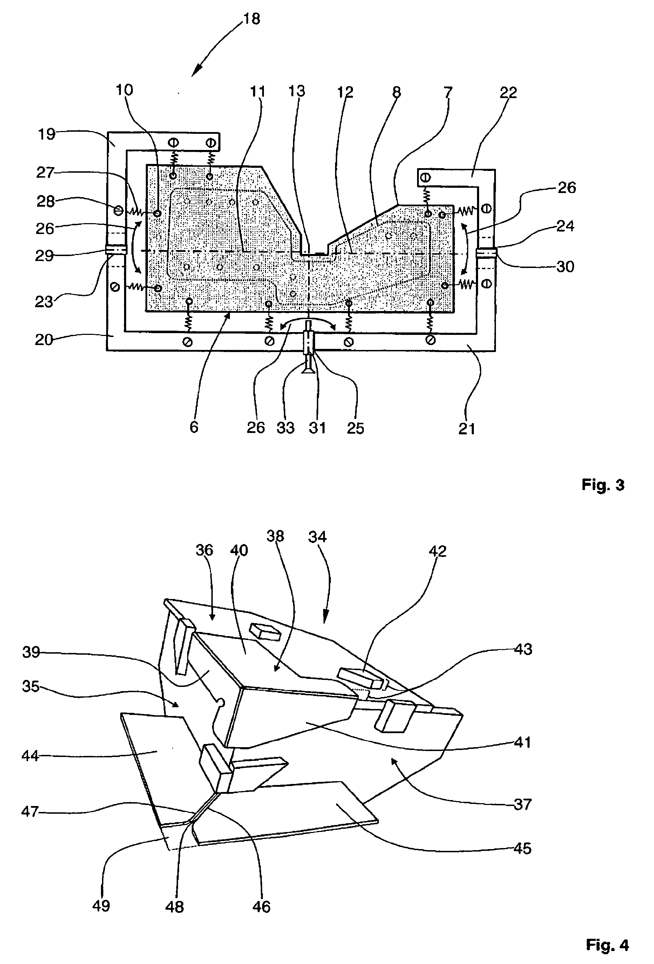

Die Fig. 3 illustriert einen Spannrahmen mit dem eingehängten Zuschnitt 6 aus der Fig. 2 in einem ebenen, nicht gefalteten so genannten "Grundzustand".
Der Zuschnitt 6 ist elastisch federnd in einem Spannrahmen 18 eingehängt. Der Spannrahmen 18 ist mit vier Abschnitten bzw. Segmenten 19 bis 22 gebildet, die untereinander mit drei Scharnieren 23 bis 25 gelenkig verbunden sind. Die Bänder der Scharniere 23 bis , 25 sind jeweils durch zwei gestrichelten Linien im Bereich der Segmente angedeutet. Durch die Scharniere 23 bis 25 können die Segmente 19 bis 22 in den Richtungen, die durch die drei schwarzen Doppelpfeile 26 angedeutet sind, jeweils um bis zu 120° zueinander verschwenkt werden, wobei die Segmente 19 bis 22 im Grundzustand der Fig. 3 zueinander jeweils einen Winkel von 0° einschließen.
Jedes der vier Segmente 19 bis 22 weist von oben gesehen eine in etwa L-förmige Gestalt auf und ist beispielsweise aus einem metallischen Flachprofil mit einer rechteckförmigen Querschnittsgeometrie gebildet.
Zur elastisch-federnden Aufhängung des Zuschnittes 6 wird vorzugsweise eine Vielzahl von (Zug)-Spiralfedern eingesetzt, von denen eine Feder 27 stellvertretend für die Übrigen mit einer Bezugsziffer versehen ist. Die (Zug)-Federn 27 sind um die Außenkontur 7 des Zuschnittes 6 herum verteilt angeordnet. Zur Befestigung der Federn 27 dienen zum Beispiel Schrauben, von denen eine Schraube 28 mit einer Bezugsziffer versehen ist. Ein Ende der (Zug)-Feder 27 ist mittels der Schraube 28 im Segment 19 des Spannrahmens 18 befestigt, während das hiervon wegweisende andere Ende der Feder 27 in die Bohrung 10 des Zuschnittes 6 eingehängt ist. Die (Zug)-Federn 27 können auch direkt in Bohrungen in den Segmenten 19 bis 22 befestigt sein.
Die Faltlinien 11 bis 13 fallen in etwa mit den drei Schwenkachsen 29 bis 31 der Scharniere 23 bis 25 zusammen. Die Befestigung der Federn am Spannrahmen 18 erfolgt vorzugsweise derart, dass auf einer Oberseite und einer Unterseite des Spannrahmens 18 keine Erhebungen bzw. Aufdickungen entstehen. Dies kann beispielsweise durch die Verwendung von Senkkopfschrauben mit Maschinengewinde erreicht werden. Alternativ können die Schrauben auch zugleich als Distanzelemente zum weiter unter beschriebenen Unterwerkzeug dienen, so dass es auf einen bündigen Abschluss zum Spannrahmen nicht ankommt.
Anstatt der (Zug)-Federn können andere elastische Elemente, wie zum Beispiel Gummizüge oder eine Kombination hiervon eingesetzt werden. Weiterhin können auch unelastische Drähte, Nägel oder Drähte aus Memory-Metallen zur Befestigung des Zuschnittes im Spannrahmen 18 dienen. Die Schwenkachse 31 des Scharniers 25 ist mit einer Schraube 33 mit einem konischen Kopf als Führungsmittel ausgestaltet. Das Führungsmittel dient zur exakten Ausrichtung des Spannrahmens 18 in Bezug auf das weiter unten in Fig. 4 dargestellte und beschriebene Unterwerkzeug der Vorrichtung. Anstelle der Schraube 33 kann auch ein Stift oder dergleichen als Führungsmittel dienen.
In dem in Fig. 3 illustrierten "Grundzustand" des Spannrahmens 18 schließen die beiden Schwenkachsen 29,30 einen Winkel von 0° bzw. 180° zueinander ein, das heißt die genannten Achsen 29,30 verlaufen parallel zueinander. Demgegenüber verläuft die Schwenkachse 31 unter einem Winkel von etwa 90° in Relation zu den beiden Schwenkachsen 29,30.

Die **Fig. 4** illustriert eine perspektivische Ansicht eines für die Vorrichtung eingesetzten Unterwerkzeugs.
Wie aus der Fig. 4 erkenntlich ist, weist das Unterwerkzeug 34 (Basispyramide) angenähert die geometrische Gestalt eines Oberteils einer dreiseitigen Pyramide mit drei gleich geneigten und jeweils gleich großen Seitenflächen 35 bis 37 auf, die im gezeigten Ausführungsbeispiel jeweils senkrecht aufeinander stehen und gleichseitige Dreiecke darstellen. Die drei Seitenflächen 35 bis 37 des Unterwerkzeugs laufen in einen gedachten, nicht mit einer Bezugsziffer versehenen Scheitelpunkt zusammen. Ferner ist auf dem Unterwerkzeug 34 ein abnehmbarer Aufsatz 38 befestigt, der über drei Auflageflächen 39 bis 41 für den Zuschnitt 6 verfügt. Obere Endbereiche der Auflageflächen 39 bis 41 bilden in etwa einen gleichseitigen Tetraeder, denn die Auflageflächen 39 bis 41 verlaufen parallel zu den Seitenflächen des Unterwerkzeugs 34. Die Auflageflächen 39 bis 41 des Aufsatzes 38 können unter einem geringfügig von 90° abweichenden Winkel zueinander angeordnet sein. Hierdurch verlaufen die Auflageflächen 39 bis 41 nicht mehr parallel zu den Seitenflächen 35 bis 37 und es lassen sich Winkel mit nicht unter einem Winkel von 90° zueinander verlaufenden Flanschen fertigen.

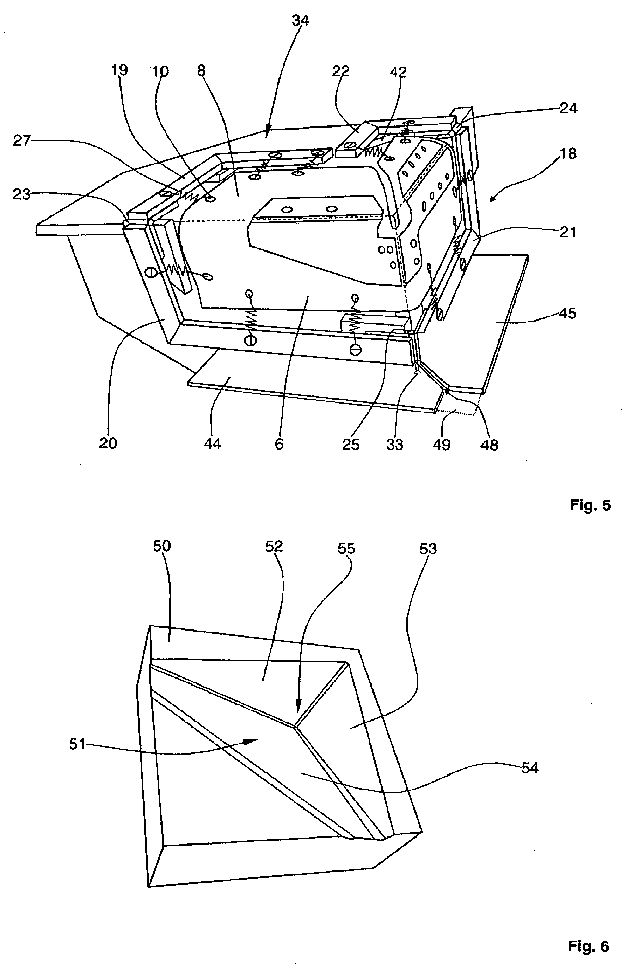

Darüber hinaus können sowohl das Unterwerkzeug 34 als auch der Aufsatz 38 eine nahezu beliebige, von einem Tetraeder abweichende Geometrie aufweisen - die beispielsweise einem Bereich einer Oberflächengeometrie eines Polyeders gleichen kann - und die eine hinterschneidungsfreie Trennung von Unterwerkzeug 34 einschließlich Aufsatz 38 sowie Oberwerkzeug erlaubt. Die Geometrie des Oberwerkzeugs (vgl. Fig. 6) muss der Formgebung des Unterwerkzeugs 34 mit dem Aufsatz 38 folgen, wobei auch die Anzahl und die Formgebung der gelenkig verbundenen Segmente des Spannrahmens 18 hieran anzupassen ist.
Der Aufsatz 38 ist vom Unterwerkzeug 34 nach dem Lösen von nicht dargestellten Befestigungsmitteln abnehmbar. Hierdurch kann der Aufsatz 38 im Bedarfsfall leicht gegen einen Aufsatz mit abweichend angeordneten Auflageflächen ausgetauscht werden, bei dem diese zum Beispiel in einem von 90° voneinander abweichenden Winkel zueinander verlaufen, um Anbindungswinkel mit einer alternativen geometrischen Gestalt zu fertigen. Die Auflageflächen 39 bis 41 verlaufen jeweils parallel zu den Seitenflächen 35 bis 37. Die Auflagefläche 39 bis 41 definieren eine Innenseite des aus dem ebenen Zuschnitt 6 zu formenden Winkels. Weiterhin ist auf den Seitenflächen 35 bis 37 eine Vielzahl von erhabenen Abstandhaltern angeordnet, von denen ein Abstandhalter 42 repräsentativ mit einer Bezugsziffer versehen ist. Die Abstandhalter dienen dazu, den Spannrahmen 18 in Bezug auf die Seitenflächen 35 bis 37 sowie die die eigentliche Formfläche bildenden Auflageflächen 39 bis 41 gleichmäßig in etwa auf dem gleichen Niveau zu halten. Sowohl die Abstandhalter als auch die Auflageflächen 39 bis 41 weisen zu diesem Zweck ungefähr dieselbe Höhe 43 bzw. denselben Abstand zur den Seitenflächen 35 bis 37 auf. Darüber hinaus sind an den Seitenflächen 35 und 37 zwei Halteplatten 44,45 angeordnet. Die Halteplatten 44,45 stehen senkrecht auf den Seitenflächen 35,37 und dienen als "Auflagetische" bzw. Distanzelemente für den Spannrahmen 18, insbesondere für die Segmente 20 und 21. Nicht bezeichnete Endabschnitte der Halteplatten 44,45 weisen innenseitig unter einem Winkel von 45° verlaufende Endkanten 46,47 auf, die unter Bildung eines Spaltes 48 abschnittsweise parallel beabstandet aneinander grenzen. Außenseitig sind die Endabschnitte der Halteplatten 44,45 rechtwinklig auf Gehrung angeschnitten, so dass sich eine Ausnehmung 49 mit einer angenähert quadratischen Gestalt ergibt, die das Einfädeln bzw. das Einführen der am Spannrahmen 18 angeordneten Schraube 33 in den Spalt 48 erleichtert. Durch die in den Spalt 48 eingeführte Schraube 33 wird der auf den Halteplatten 44,45 aufliegende Spannrahmen 18 horizontal präzise in Bezug auf das Unterwerkzeug 34 ausgerichtet. Zu diesem Zweck besteht zwischen der Schraube 33 und dem Spalt 48 ein leichter, geringfügiger Pressschluss. Das Unterwerkzeug 34 wird vorzugsweise mit einer Aluminiumlegierung oder einer hochwarmfesten Stahllegierung gebildet.

Die **Fig. 5** zeigt das Unterwerkzeug aus Fig. 4 mit aufliegendem Spannrahmen, wobei in den Spannrahmen der durch Erhitzen vollständig plastifizierte und bereits teilumgeformte Zuschnitt elastisch-federnd eingehängt ist. Die Fig. 5 ist in Bezug auf die Ansicht der Fig. 4 etwa um 90° um die Hochachse (z-Achse) nach rechts verdreht dargestellt.

In den Spannrahmen 18 ist der Zuschnitt 6 zum Beispiel mittels der (Zug)-Federn elastisch-federnd eingehängt. Das elastisch-federnde Einspannen des Zuschnittes 6 im Spannrahmen 18 erfolgt durch eine Vielzahl von (Zug)-Federn, die an einer Seite an den Segmenten 19 bis 22 des Spannrahmens 18 befestigt und deren andere Enden jeweils in Bohrungen innerhalb des Zuschnittes 6 eingehängt sind. Eine Bohrung 10 im Zuschnitt 6 und eine darin eingehängte Feder 27 sind stellvertretend für alle übrigen mit Bezugsziffern versehen.
Der Spannrahmen 18 liegt auf dem Unterwerkzeug 34 vorzugsweise derart auf, dass die Segmente 19 bis 22 auf den mindestens drei erhöhten Abstandhaltern der betreffenden Seitenflächen 35 bis 37 aufliegen und gleichmäßig unterstützt werden, von denen ein Abstandhalter 42 stellvertretend für alle eine Bezugsziffer trägt.
Der Abstandhalter 42 und alle weiteren können alternativ in Stufen oder stufenlos höhenverstellbar sein. Die Höhenverstellbarkeit kann beispielsweise durch das Übereinanderschichten von Zulagen mit definierter Materialstärke oder mit einer Gewindeschraube für eine stufenlose Anpassbarkeit realisiert sein. Die Abstandhalter 42 können auf eine im Vergleich zu den Auflageflächen 39 bis 41 des Aufsatzes 38 geringere Höhe eingestellt sein, um von 90° abweichende Winkel zwischen den Spantflanschen 14,15, dem Hautflansch 16 sowie dem Stützflansch 17 zu erzielen.
Die beiden unteren Segmente 20 und 21 des Spannrahmens 18 liegen zusätzlich zumindest abschnittsweise auf den Halteplatten 44,45 auf. Die Schraube 33, die im Anschlag 32 des Spannrahmens 18 befestigt ist, wird im Spalt 48 zwischen den Halteplatte 44,45 geführt, wodurch eine exakte und vor allem für die Serienfertigung der Winkel sicher reproduzierbare Positionierung des Zuschnittes 6 in Relation zum Unterwerkzeug 34 und insbesondere in Relation zu den in Fig. 5 verdeckten formdefinierenden Auflageflächen 39 bis 41 gegeben ist. Die Außenkanten der formdefinierenden Auflageflächen sind durch drei, sich unter einem rechten Winkel in einem Punkt schneidende, gestrichelte Linien angedeutet. Die erhöhten Abstandhalter gewährleisten in Verbindung mit den gleichfalls erhöhten Auflageflächen (vgl. insb. Fig. 4) dasselbe Niveau zwischen dem Spannrahmen 18 und dem Zuschnitt 6. Die Innenkontur 8 ist durch die umlaufende punktierte Linie, einschließlich der ungefähren Positionen der späteren Befestigungsbohrungen innerhalb des umgeformten Winkels, angedeutet. Zwischen den Segmenten 20,21 und den Segmenten 20,19 sowie den Segmenten 21,22 besteht in dem in Fig. 5 gezeigten "Formzustand" des Spannrahmens 18 jeweils ein Winkel von etwa 90°. Diese Winkelstellung der einzelnen Segmente 19 bis 22 des Spannrahmens 18 zueinander wird durch die Scharniere 23 bis 25 ermöglicht.

Die **Fig. 6** zeigt eine perspektivische Ansicht eines Oberwerkzeugs der erfindungsgemäßen Umformvorrichtung von unten.
Ein Oberwerkzeug 50 ist einstückig ausgebildet. Das Oberwerkzeug 50 kann beispielsweise aus einem Block einer Aluminiumlegierung, einer Titanlegierung oder einer hochwarmfesten Stahllegierung spanend herausgearbeitet werden.
Das Oberwerkzeug 50 verfügt über eine formdefinierende Vertiefung 51, die unter anderem drei Innenflächen 52 bis 54 aufweist. Die Vertiefung 51 korrespondiert mit den Auflageflächen 39 bis 41 des Aufsatzes 38 auf dem Unterwerkzeug 34 und definiert die endgültigen Außenflächen des zu formenden späteren (Anbindungs-) Winkels. Die Innenflächen 52 bis 54 des Unterwerkzeuges 34 schneiden sich in etwa senkrecht in einem gedachten Schnittpunkt 55. Zur Fertigstellung des Winkels wird das Oberwerkzeug 50 auf das Unterwerkzeug 34 mit dem aufgespanntem Zuschnitt 6 (vgl. Fig. 5) aufgesetzt und der gesamte Aufbau anschließend in einer (nicht dargestellten) einachsigen Pressvorrichtung zur Konsolidierung des Winkels durch die Anwendung von Druck zusammengepresst. Hierbei ermöglicht die randseitige elastisch-federnde Aufhängung des Zuschnittes 6 das interlaminare Gleiten und eine faltenfreie Umformung.
Nach der Beendigung des Pressvorgangs muss der umgeformte Winkel noch auf eine vorgegebene Sollkontur gebracht werden, was in der Regel durch eine allseitige Besäumung bzw. Beschneidung erfolgt. Darüber hinaus ist es noch erforderlich, Bohrungen zur mechanischen Befestigung des umgeformten Winkels innerhalb der Rumpfzellenstruktur des Flugzeugs vorzusehen. Diese Bohrungen können beispielsweise spanend in die Schenkel des fertigen Winkels eingebracht werden. Sowohl das Unterwerkzeug 34 als auch das Oberwerkzeug 50 können alternativ über integrierte Heizeinrichtungen verfügen, um eine Abkühlung des Zuschnittes zu verlangsamen. Die Heizeinrichtung kann elektrisch oder mittels erhitzter gasförmiger oder flüssiger Stoffe wirken.
Das Unterwerkzeug 34 ist an einem Pressentisch einer in den Figuren nicht dargestellten einachsigen Pressvorrichtung als Teil der erfindungsgemäßen Vorrichtung befestigt, während das Oberwerkzeug 50 gegenüberliegend zum Unterwerkzeug 34 am Stempel der Pressvorrichtung aufgenommen ist.

Die **Fig. 7** veranschaulicht in einer weiteren perspektivischen Ansicht einen zu einem autostabilisierten (Anbindungs-)Winkel 56 vollständig umgeformten und beschnittenen bzw. besäumten Zuschnitt 6. Der Winkel 56 verfügt über zwei Spantflansche 14,15 sowie einen Hautflansch 16 und einen Stützflansch 17.
Wenn der Winkel 56 zum Beispiel im konischen Heckbereich einer Rumpfzellenstruktur eines Flugzeugs verbaut werden soll, kann es erforderlich sein, den Winkel zwischen Spantflansch 14 und Hautflansch 16 größer als 90° auszubilden. In diesem Fall ist es auch erforderlich, den Winkeln zwischen dem Spantflansch 15, dem Stützflansch 17 sowie dem Hautflansch 16 von 90° abweichende Werte zu geben.
Die Ebenen der Spantflansche 14,15 einerseits und die des Hautflansches 16 sowie des Stützflansches 17 andererseits können - wie in Fig. 7 dargestellt - jeweils ungefähr senkrecht aufeinander stehen. Hiervon abweichende Winkelwerte sind möglich.
Die Spantflansche 14,15 können in einer Ebene liegen oder aber einen Höhenversatz aufweisen und schließen mit einer Gehrung von etwa 45° unter Bildung eines Spaltes 57 aneinander an. Abweichend von Fig. 7 kann dieser Winkel ebenfalls von 45° abweichen.

Der Stützflansch 17 stellt die Autostabilisierung des Winkels 56 in der Rumpfzellenstruktur des Flugzeugs sicher, wodurch Kräfte in Längsrichtung des Flugzeugs (parallel zu den Stringern) vom Winkel 56 aufgenommen werden können. Im Bereich einer gedachten Schnittzone zwischen den jeweils in etwa senkrecht aufeinander stehenden Flanschen bzw. Schenkelflächen 16 und 17 sowie 14,15 befindet sich eine viereckige Ausnehmung 58, die grundsätzlich auch eine hiervon abweichende Geometrie aufweisen kann.
Der Hautflansch 16 verfügt insgesamt über eine in etwa rechtwinklige Gestalt, während der Stützflansch 17 eine angenäherte dreieckförmige Form aufweist. Die Flächenerstreckung der beiden Spantflansche 14,15 entspricht jeweils ungefähr einem Rechteck mit einer leicht abgeschrägten Kante.
Sowohl in die beiden Spantflansche 14,15 als auch in den Hautflansch 16 ist eine Vielzahl von Bohrungen eingebracht, von denen eine Bohrung 59 repräsentativ für die übrigen mit einer Bezugsziffer versehen ist. Die (Befestigungs-)Bohrungen im Hautflansch 16, den Spantflanschen 14,15 sowie dem Stützflansch 17 dienen zur mechanischen Befestigung des Winkels 56 innerhalb der Rumpfzellenstruktur des Flugzeugs durch Niet- oder Schraubverbindungen. Alternativ kann der Winkel 56 aber auch eingeklebt werden, wodurch strukturschwächende (Befestigungs-)Bohr-ungen entbehrlich werden. Die aus dem Umformvorgang resultierenden drei Umformbereiche 60 bis 62 sind jeweils hohlkehlförmig und können abschnittsweise geradlinig, eindimensional oder zweidimensional gekrümmt in Bezug zu den Achsen des Koordinatensystems 63 verlaufen. Hierdurch wird ein optimaler Sitz des Winkels 56 innerhalb der in der Regel zweidimensional (sphärisch) gekrümmten Rumpfzellenstruktur bzw. der Rumpfzellenhaut des Flugzeugs erzielt.
Der Hautflansch 16 kann mit einer Durchsetzung 64 bzw. Sicke versehen sein, um ungeachtet der Materialstärke eines Stringerflansches 65 eines Stringers 66 eine möglichst vollflächige Auflage des Hautflansches 16 auf einer nicht dargestellten, in der xy-Ebene des Koordinatensystems 63 liegenden Rumpfzellenhaut, zu gewährleisten.

Zur Durchführung des erfindungsgemäßen Verfahrens wird in einem ersten Verfahrensschritt a) ein Zuschnitt 6 aus einem faserverstärkten thermoplastischen Kunststoff in den sich im ebenen Grundzustand befindlichen Spannrahmen 18 mit einer Vielzahl von umfangsseitig angeordneten Zugfedern elastisch eingehängt. Der Zuschnitt 6 verfügt bereits über die ungefähre (Umfangs-)Kontur des späteren Winkels 56 zuzüglich eines umlaufenden Randbereichs 9, der zur Einbringung von in Fig. 7 nicht bezeichneten Haltebohrungen dient. Die (Halte-)Bohrungen (vgl. insb. Fig. 3) dienen zum Befestigen des Zuschnittes 6 in den Spannrahmen 18.
Im folgenden Verfahrensschritt b) wird der Zuschnitt 6 in einer Heizeinrichtung gleichmä-βig über seine Gesamtflächenerstreckung hinweg erhitzt, das heißt mindestens auf die Plastifizierungstemperatur der Matrix des thermoplastischen Kunststoffmaterials gebracht. Als Heizeinrichtung können zum Beispiel Heizstrahler oder ein herkömmlicher Ofen eingesetzt werden. Bei den für die Winkelherstellung zur Anwendung kommenden Hochleistungsthermoplasten sind hierfür Temperaturen vom mehr als 250°C nötig.
Im Verfahrensschritt c) wird der Spannrahmen 18 mit eingehängtem Zuschnitt 6 auf dem bereits an einem Tisch einer geeigneten Pressvorrichtung angeordneten Unterwerkzeug 34 abgelegt, wobei die Segmente 19 bis 22 des Spannrahmens 18 in bevorzugt vollen Kontakt mit den Abstandhaltern des Unterwerkzeugs 34 kommen. Das Anlegen der Segmente 19 bis 22 an das Unterwerkzeug 34 erfolgt in der Regel selbsttätig aufgrund des Eigengewichts der Segmente 19 bis 22 des Spannrahmens 18, kann aber auch mittels eines Handhabungsgerätes durchgeführt werden. In diesem Verfahrensstadium befindet sich der Spannrahmen 18 im so genannten Formzustand und der Zuschnitt 6 erfährt bereits eine erste Teilumformung in Richtung der späteren Endgeometrie des Winkels.
Im abschließenden Verfahrensschritt d) wird die Presse zusammengefahren und das an einem Stempel der einachsigen Pressvorrichtung gegenüberliegend zum Unterwerkzeug 34 angeordnete Oberwerkzeug 50 mit hohem Anpressdruck auf das Unterwerkzeug 34 gedrückt, um den Umformvorgang des Zuschnittes 6 zum fertigen Winkel, einschließlich der Konsolidierung abzuschließen. Vorzugsweise befindet sich die Heizeinrichtung innerhalb oder unmittelbar neben der Pressvorrichtung, um eine Abkühlung des Zuschnittes 6 infolge langer Verfahrwege zu vermeiden.

Der Umformprozess in der Pressvorrichtung ermöglicht zugleich das interlaminare Gleiten innerhalb der Verstärkungsfaseranordnung des Winkels 56 unter Schaffung von leicht abgeschrägten bzw. geneigten Kanten (so genannter "Bucheffekt"). Nach dem Abkühlen wird der Winkel 56 durch das Beschneiden der Kanten auf eine geforderte Sollkontur gebracht, womit zugleich die abgeschrägten Kanten entfernt werden.
Die Befestigungsbohrungen werden vorzugsweise nach dem Umformvorgang in den Winkel 56 eingebracht, können alternativ auch schon in den noch ebenen Zuschnitt 6 eingebracht sein.

Von zentraler Bedeutung für die Durchführung des Verfahrens ist, dass zwischen dem Erhitzen des Zuschnittes 6 und dem eigentlichen Umformvorgang durch das Zusammenpressen des Unterwerkzeugs 34 und des Oberwerkzeugs 50 möglichst wenig Zeit vergeht, um eine Abkühlung des Zuschnittes 6 unter den Plastifizierungspunkt weitgehend zu unterbinden.
Zu diesem Zweck wird die Heizeinrichtung zur Temperierung des bereits in den Spannrahmen 18 federnd eingehängten Zuschnittes 6 vorzugsweise unmittelbar innerhalb der Pressvorrichtung neben dem Unter- und dem Oberwerkezug 34,50 oder in großer räumlicher Nähe zur Pressvorrichtung angeordnet.

Der Anbindungswinkel lässt sich somit auf relativ einfachen, kostengünstigen, einachsig wirkenden Pressvorrichtungen bzw. Pressen schnell und in hoher Stückzahl mit großer Maßhaltigkeit sowie Reproduzierbarkeit fertigen.

### Bezugszeichenliste

- 1: Ringspant
- 2: Stringer
- 3: Rumpfzellenhaut
- 4: (Aluminium-) Winkel
- 5: Niet
- 6: Zuschnitt
- 7: Außenkontur (Zuschnitt)
- 8: Innenkontur (Winkel)
- 9: Randbereich
- 10: Bohrung (Randbereich)
- 11: Faltlinie
- 12: Faltlinie
- 13: Faltlinie
- 14: Spantflansch
- 15: Spantflansch
- 16: Hautflansch
- 17: Stützflansch
- 18: Spannrahmen (mehrfach faltbar)
- 19: Segment (Rahmensegment)
- 20: Segment (Rahmensegment)
- 21: Segment (Rahmensegment)
- 22: Segment (Rahmensegment)
- 23: Scharnier
- 24: Scharnier
- 25: Scharnier
- 26: Doppelpfeil
- 27: (Zug)-Feder
- 28: Schraube
- 29: Schwenkachse (Scharnier)
- 30: Schwenkachse (Scharnier)
- 31: Schwenkachse (Scharnier)
- 33: Schraube (mit konischem Kopf)
- 34: Unterwerkzeug
- 35: Seitenfläche
- 36: Seitenfläche
- 37: Seitenfläche
- 38: Aufsatz
- 39: Auflagefläche
- 40: Auflagefläche
- 41: Auflagefläche
- 42: Abstandhalter
- 43: Höhe (Abstandhalter)
- 44: Halteplatte
- 45: Halteplatte
- 46: Endkante (Halteplatte)
- 47: Endkante (Halteplatte)
- 48: Spalt
- 49: Ausnehmung (zwischen Halteplatten)
- 50: Oberwerkzeug
- 51: Vertiefung
- 52: Innenfläche
- 53: Innenfläche
- 54: Innenfläche
- 55: Schnittpunkt (-bereich)
- 56: Winkel
- 57: Spalt
- 58: Ausnehmung
- 59: (Befestigungs-) Bohrung
- 60: Umformbereich
- 61: Umformbereich
- 62: Umformbereich
- 63: Koordinatensystem
- 64: Durchsetzung
- 65: Stringerflansch
- 66: Stringer

## Patentansprüche

1. Vorrichtung zur Herstellung eines Bauteils, insbesondere eines Winkels (56) zur Anbindung einer Rumpfzellenhaut (3) an einen Ringspant (1) eines Flugzeugs, wobei das Bauteil durch einzugiges Umformen eines ebenen Zuschnittes (6) entlang von mindestens drei Faltlinien (11-13) in einer Pressvorrichtung umgeformt wird, und der Zuschnitt (6) mit einem faserverstärkten thermoplastischen Kunststoff gebildet ist, wobei zwischen einem Unterwerkzeug (34) und einem Oberwerkzeug (50) ein Spannrahmen (18) angeordnet ist und der Zuschnitt (6) im Spannrahmen (18) befestigt ist, wobei der Spannrahmen (18) mit mindestens zwei Segmenten (19-22) gebildet ist, wobei die mindestens zwei Segmente mit mindestens einem Scharnier (23-25) gelenkig miteinander verbunden sind, und wobei der Spannrahmen (18) durch ein Verschwenken der mindestens zwei Segmente (19-22) an das Unterwerkzeug (34) anlegbar ist.

2. Vorrichtung nach Patentanspruch 1, **dadurch gekennzeichnet, dass** der Zuschnitt (6) in dem Spannrahmen (18) mittels einer Vielzahl von elastischen Elementen, insbesondere Federn (27), eingehängt ist.

3. Vorrichtung nach Patentanspruch 1 oder 2, **dadurch gekennzeichnet, dass** der Spannrahmen (18) mit mindestens vier Segmenten (19-22) gebildet ist, wobei die Segmente (19-22) durch das mindestens eine Scharnier (23-25) gelenkig miteinander verbunden sind.

4. Vorrichtung nach einem der Patentansprüche 1 bis 3, **dadurch gekennzeichnet, dass** die mindestens vier Segmente (19-22) jeweils in etwa L-förmig ausgestaltet sind.

5. Vorrichtung nach einem der Patentansprüche 1 bis 4, **dadurch gekennzeichnet, dass** Schwenkachsen (29-31) der Scharniere (23-25) in einem Formzustand des Spannrahmens (18) jeweils zueinander Winkel von bis zu 120° einschließen.

6. Vorrichtung nach einem der Patentansprüche 1 bis 5, **dadurch gekennzeichnet, dass** in einem ebenen Grundzustand des Spannrahmens (18) mindestens zwei Schwenkachsen (29,30) in etwa parallel zueinander verlaufen und mindestens eine Schwenkachse (31) zu den mindestens zwei Schwenkachsen (29,30) in etwa senkrecht verläuft.

7. Vorrichtung nach einem der Patentansprüche 1 bis 6, **dadurch gekennzeichnet, dass** das Unterwerkzeug (34) im Wesentlichen die Form eines Polyeders, insbesondere die eines Tetraeders, aufweist.

8. Vorrichtung nach einem der Patentansprüche 1 bis 7, **dadurch gekennzeichnet, dass** das Unterwerkzeug (34) eine Vielzahl von erhabenen Abstandhaltern (42) für den Spannrahmen (18) aufweist, um zwischen dem Spannrahmen (18) und mindestens drei Seitenflächen (35-37) des Unterwerkzeugs (34) eine definierte Höhe (43) einzustellen.

9. Vorrichtung nach einem der Patentansprüche 1 bis 8, **dadurch gekennzeichnet, dass** am Unterwerkzeug (34) eine Führung, insbesondere zwei Halteplatten (44,45) für den Spannrahmen (18), vorgesehen ist, wobei in die Führung ein am Spannrahmen angeordnetes Führungsmittel, insbesondere eine Schraube (33), einbringbar ist.

10. Vorrichtung nach einem der Patentansprüche 1 bis 9, **dadurch gekennzeichnet, dass** das Unterwerkzeug (34) einen Aufsatz (38) mit mindestens drei Auflageflächen (39-41) für den Zuschnitt (6) aufweist.

11. Verfahren zur Herstellung eines Bauteils, insbesondere eines Winkels (56) zur Anbindung einer Rumpfzellenhaut (3) an einen Ringspant (1) eines Flugzeugs, mit einer Vorrichtung nach Maßgabe mindestens eines der Patentansprüche 1 bis 10, umfassend die folgenden Schritte:
a) Einbringen eines mit einem faserverstärkten thermoplastischen Kunststoff gebildeten ebenen Zuschnittes (6) in einen, mindestens ein Scharnier (23 - 25) aufweisenden, Spannrahmen (18),
b) Erhitzen des Zuschnittes (6),
c) Positionieren des Spannrahmens (18) mit mindestens einem Scharnier (23 - 25) auf einem Unterwerkzeug (34), wobei der Spannrahmen (18) durch das Verschwenken der Segmente (19 - 22) an das Unterwerkzeug angelegt wird, und
d) Zusammenpressen des Unterwerkzeugs (34) und eines Oberwerkzeugs (50) in einer Pressvorrichtung.

12. Verfahren nach Patentanspruch 11, **dadurch gekennzeichnet, dass** das Anordnen des Spannrahmens (18) auf dem Unterwerkzeug (34) durch das Verschwenken von mindestens vier gelenkig miteinander verbundenen Segmenten (19-22) des Spannrahmens (18) in einen Formzustand erfolgt.

13. Verfahren nach Patentanspruch 11 oder 12, **dadurch gekennzeichnet, dass** zunächst ein erstes und ein zweites Segment (20,21) des Spannrahmens (18) an das Unterwerkzeug (34) angelegt werden und anschließend ein drittes und viertes Segment (19,22) an das Unterwerkzeug (34) angelegt werden.

14. Verfahren nach einem der Patentansprüche 11 bis 13, **dadurch gekennzeichnet, dass** in den ebenen Zuschnitt (6) eine Vielzahl von Ausnehmungen, insbesondere Bohrungen (10), eingebracht werden und der Zuschnitt (6) anschließend in dem Spannrahmen (18) elastisch, insbesondere mit einer Vielzahl von Federn (27), eingehängt wird.

15. Verfahren nach einem der Patentansprüche 11 bis 14, **dadurch gekennzeichnet, dass** der Winkel (56) beschnitten wird und/oder Befestigungsbohrungen (59) eingebracht werden.

## Claims

1. A device for producing a component, in particular an angle clip (56), for connecting a fuselage skin (3) to an annular frame (1) of an aircraft, the component being shaped by single-pass shaping of a flat blank (6) along at least three fold lines (11-13) in a pressing apparatus, and the blank (6) being formed of a fibre-reinforced thermoplastic, a clamping frame (18) being arranged between a bottom die (34) and a top die (50) and the blank (6) being fastened in the clamping frame (18), the clamping frame (18) being formed of at least two segments (19-22), the at least two segments being connected articulatedly together with at least one hinge (23-25), and the at least two segments (19-22) being swivelled to apply the clamping frame (18) against the bottom die (34).

2. A device according to claim 1, **characterised in that** the blank (6) is suspended in the clamping frame (18) by means of a plurality of resilient elements, in particular springs (27).

3. A device according to claim 1 or claim 2, **characterised in that** the clamping frame (18) is formed of at least four segments (19-22), the segments (19-22) being connected articulatedly together by the at least one hinge (23-25).

4. A device according to any one of claims 1 to 3, **characterised in that** the at least four segments (19-22) are each roughly L-shaped.

5. A device according to any one of claims 1 to 4, **characterised in that** pivot axes (29-31) of the hinges (23-25) each form an angle to one another of up to 120° when the clamping frame (18) is in the shaping state.

6. A device according to any one of claims 1 to 5, **characterised in that** when the clamping frame (18) is in its basic, flat state, at least two pivot axes (29, 30) extend roughly parallel to one another and at least one pivot axis (31) extends roughly perpendicular to the at least two pivot axes (29, 30).

7. A device according to any one of claims 1 to 6, **characterised in that** the bottom die (34) substantially takes the form of a polyhedron, in particular of a tetrahedron.

8. A device according to any one of claims 1 to 7, **characterised in that** the bottom die (34) comprises a plurality of raised spacers (42) for the clamping frame (18), for establishing a defined height (43) between the clamping frame (18) and at least three side faces (35-37) of the bottom die (34).

9. A device according to any one of claims 1 to 8, **characterised in that** a guide, in particular two retaining plates (44, 45) for the clamping frame (18), is provided on the bottom die (34), wherein a guide means, in particular a screw (33), arranged on the clamping frame may be introduced into the guide.

10. A device according to any one of claims 1 to 9, **characterised in that** the bottom die (34) comprises an attachment (38) with at least three bearing faces (39-41) for the blank (6).

11. A method of producing a component, in particular an angle clip (56), for connecting a fuselage skin (3) to an annular frame (1) of an aircraft, having a device in accordance with at least one of claims 1 to 10, said method comprising the following steps:
a) introducing a flat blank (6) formed of a fibre-reinforced thermoplastic into a clamping frame (18) comprising at least one hinge (23-25),
b) heating the blank (6),
c) positioning the clamping frame (18) with at least one hinge (23-25) on a bottom die (34), the clamping frame (18) being applied against the bottom die by swivelling the segments (19-22), and
d) pressing the bottom die (34) and a top die (50) together in a pressing apparatus.

12. A method according to claim 11, **characterised in that** the clamping frame (18) is arranged on the bottom die (34) by swivelling at least four articulatedly connected segments (19-22) of the clamping frame (18) into a shaping state.

13. A method according to claim 11 or claim 12, **characterised in that** firstly a first segment and a second segment (20, 21) of the clamping frame (18) are applied against the bottom die (34) and then a third segment and a fourth segment (19, 22) are applied against the bottom die (34).

14. A method according to any one of claims 11 to 13, **characterised in that** a plurality of openings, in particular drilled holes (10), are introduced into the flat blank (6) and the blank (6) is then suspended resiliently in the clamping frame (18), in particular with a plurality of springs (27). 15. A method according to any one of claims 11 to 14, **characterised in that** the angle clip (56) is trimmed and/or fastening holes (59) are introduced.

15. A method according to any one of claims 11 to 14, **characterised in that** the angle clip (56) is trimmed and/or fastening holes (59) are introduced.

## Revendications

1. Dispositif de fabrication d'un composant, en particulier d'une équerre de suspension (56) destinée à fixer une enveloppe de cabine de fuselage (3) à un couple annulaire (1) d'un aéronef, le composant étant déformé par simple déformation d'une pièce découpée (6) plate le long d'au moins trois lignes de pliage (11-13) dans une presse, et la pièce découpée (6) étant fabriquée dans un matériau synthétique thermoplastique renforcé par des fibres, une rame (18) étant disposée entre une matrice inférieure (34) et une matrice supérieure (50) et la pièce découpée (6) étant fixée dans la rame (18), la rame (18) étant formée d'au moins deux segments (19-22), au moins deux segments étant reliés de manière articulée avec au moins une charnière (23-25), et la rame (18) étant appliquée sur la matrice inférieure (34) par un vrillage d'au moins deux segments (19-22).

2. Dispositif selon la revendication 1, **caractérisé par le fait que** la pièce découpée (6) est accrochée dans la rame (18) au moyen d'une multitude d'éléments élastiques, en particulier de ressorts (27).

3. Dispositif selon la revendication 1 ou 2, **caractérisé par le fait que** la rame (18) est formée d'au moins quatre segments (19-22), les segments (19-22) étant reliés de manière articulée entre eux par au moins une charnière (23-25).

4. Dispositif selon l'une des revendications 1 à 3, **caractérisé par le fait que** au moins quatre segments (19-22) sont conçus respectivement sous la forme approximative de L.

5. Dispositif selon l'une des revendications 1 à 4, **caractérisé par le fait que** des axes de pivotement (29-31) des charnières (23-25) dans un état de forme de la rame (18) comprennent respectivement entre eux des angles allant jusqu'à 120°.

6. Dispositif selon l'une des revendications 1 à 5, **caractérisé par le fait que**, dans un état de base plat de la rame (18), au moins deux axes de pivotement (29, 30) s'étendent approximativement de manière parallèle l'un par rapport à l'autre et au moins un axe de pivotement (31) s'étend à peu près de manière perpendiculaire à au moins deux axes de pivotement (29, 30).

7. Dispositif selon l'une des revendications 1 à 6, **caractérisé par le fait que** la matrice inférieure (34) présente essentiellement la forme d'un polyèdre, en particulier la forme d'un tétraèdre.

8. Dispositif selon l'une des revendications 1 à 7, **caractérisé par le fait que** la matrice inférieure (34) présente une multitude d'éléments d'écartement (42) surélevés pour la rame (18), pour régler une hauteur définie (43) entre la rame (18) et au moins trois faces latérales (35-37) de la matrice inférieure (34).

9. Dispositif selon l'une des revendications 1 à 8, **caractérisé par le fait que** un guidage, en particulier deux plaques de support (44, 45) est prévu pour la rame (18) au niveau de la matrice inférieure (34), un moyen de guidage placé au niveau de la rame, en particulier une vis (33), pouvant être intégré dans le guidage.

10. Dispositif selon l'une des revendications 1 à 9, **caractérisé par le fait que** la matrice inférieure (34) présente un chapeau (38) doté d'au moins trois surfaces d'appui (39-41) pour la pièce découpée (6).

11. Procédé de fabrication d'un composant, en particulier d'une équerre de suspension (56) destinée à fixer une enveloppe de cabine de fuselage (3) à un couple annulaire (1) d'un aéronef, avec un dispositif selon au moins l'une des revendications 1 à 10, comportant les étapes suivantes :
a) insertion d'une pièce découpée (6) plate formée avec un matériau synthétique thermoplastique renforcé par des fibres dans une rame (18) présentant au moins une charnière (23-25),
b) chauffage de la pièce découpée (6),
c) positionnement de la rame (18) avec au moins une charnière (23-25) sur une matrice inférieure (34), la rame (18) étant appliquée sur la matrice inférieure par le vrillage des segments (19-22), et
d) compression de la matrice inférieure (34) et d'une matrice supérieure (50) dans une presse.

12. Procédé selon la revendication 11, **caractérisé par le fait que** le placement de la rame (18) sur la matrice inférieure (34) s'effectue dans un état de forme par le vrillage d'au moins quatre segments (19-22) de la rame (18) reliés de manière articulée entre eux.

13. Procédé selon la revendication 11 ou 12, **caractérisé par le fait qu'**un premier et un second segment (20,21) de la rame (18) sont d'abord appliqués sur la matrice inférieure (34) puis un troisième et un quatrième segment (19,22) sont appliqués sur la matrice inférieure (34).

14. Procédé selon l'une des revendications 11 à 13, **caractérisé par le fait qu'**une multitude d'évidements, en particulier des alésages (10), sont intégrés dans la pièce découpée (6) plate et la pièce découpée (6) est ensuite accrochée de manière élastique dans la rame (18), en particulier avec une multitude de ressorts (27).

15. Procédé selon l'une des revendications 11 à 14, **caractérisé par le fait que** l'équerre de suspension (56) est découpée et/ou des alésages de fixation (59) sont intégrés.
